(19) Europäisches Patentamt
European Patent Office
Office européen des brevets

(11) **EP 4 276 623 A1**

(12) **EUROPEAN PATENT APPLICATION**
published in accordance with Art. 153(4) EPC

(43) Date of publication:
**15.11.2023 Bulletin 2023/46**

(21) Application number: **21927455.2**

(22) Date of filing: **29.06.2021**

(51) International Patent Classification (IPC):
*G06F 9/50* (2006.01)

(52) Cooperative Patent Classification (CPC):
**G06F 9/50; G06F 9/54**

(86) International application number:
**PCT/CN2021/103111**

(87) International publication number:
**WO 2022/179023 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 CN 202110209778
25.03.2021 CN 202110321985**

(71) Applicant: **Huawei Technologies Co., Ltd.
Shenzhen, Guangdong 518129 (CN)**

(72) Inventors:
• **KE, Zhan
Shenzhen, Guangdong 518129 (CN)**
• **ZHANG, Junchen
Shenzhen, Guangdong 518129 (CN)**
• **WANG, Jianhui
Shenzhen, Guangdong 518129 (CN)**

(74) Representative: **Gill Jennings & Every LLP
The Broadgate Tower
20 Primrose Street
London EC2A 2ES (GB)**

(54) **SORTING DEVICE AND METHOD**

(57)    This application relates to a sorting apparatus and method. The sorting apparatus includes a hardware sorting unit and a processor. The hardware sorting unit is configured to determine slice granularities of a plurality of to-be-sorted elements, and determine an end value of each of some or all M slices obtained based on the slice granularities. The processor is configured to determine K elements in the plurality of elements based on the end value of each of the some or all slices, where the K elements are elements whose values are maximum or minimum in the plurality of elements. The hardware sorting unit shares some tasks of the processor, and the processor does not need to participate in an entire sorting process. Therefore, compared with a manner in which the processor independently performs sorting, efficiency is higher.

FIG. 5

EP 4 276 623 A1

**Description**

This application claims priority to Chinese Patent Application No. 202110209778.3, filed with the China Intellectual Property Administration on February 25, 2021 and entitled "SORTING METHOD AND APPARATUS", and to Chinese Patent Application No. 202110321985.8, filed with the China Intellectual Property Administration on March 25, 2021 and entitled "SORTING APPARATUS AND METHOD", which are incorporated herein by reference in its entirety.

**TECHNICAL FIELD**

This application relates to the field of communication technologies, and in particular, to a sorting apparatus and method.

**BACKGROUND**

With the continuous development of science and technology, an amount of information keeps increasing. To search for valid information in massive data, a requirement for retrieving or clustering a feature of the data is increasingly urgent. A meaning of the feature may be determined by retrieving the feature of the data, and a category of the data may be determined by clustering the feature of the data. A process such as retrieving or clustering the feature usually includes a calculation process of a feature distance and a sorting process of top (Top) K feature distances. Calculation of the feature distance is mainly to calculate a feature distance between a to-be-queried feature vector and a feature vector in a vector library. Sorting of the top K feature distances is to determine, through sorting, the top K feature distances in a feature distance obtained through calculation, and a meaning, a type, or the like of the to-be-queried feature vector may be determined based on the top K feature distances.

Currently, the sorting process of the top K feature distances is usually completed by a general-purpose processor such as a central processing unit (central processing unit, CPU), or is completed by a multi-core processor in a multi-core parallel manner. If the sorting process is completed by the general-purpose processor, because the general-purpose processor may only perform serial processing, and the general-purpose processor may further perform a plurality of other tasks in addition to performing a sorting task, efficiency of the sorting process is low. If the sorting process is completed by the multi-core processor in parallel, power consumption is high. It may be learned that the sorting process of the top K feature distances has become a bottleneck of a process such as retrieving or clustering.

**SUMMARY**

Embodiments of this application provide a sorting apparatus and method, to improve sorting efficiency and reduce power consumption.

According to a first aspect, a sorting apparatus is provided. The sorting apparatus may be a functional module disposed in a server or another device. The functional module is, for example, a chip, or may be a functional module in another form. The sorting apparatus may include a hardware sorting unit and a processor. The hardware sorting unit may be configured to determine slice granularities of a plurality of to-be-sorted elements, and determine an end value of each of some or all M slices obtained based on the slice granularities, where each slice includes N elements, N is an integer greater than or equal to 2, and the end value is a maximum value or a minimum value. The processor may be configured to determine K elements in the plurality of elements based on the end value of each of the some or all slices, where the K elements are elements whose values are maximum or minimum in the plurality of elements, and K is a positive integer.

The sorting apparatus provided in embodiments of this application may include the hardware sorting unit and the processor. The hardware sorting unit may obtain the M slices, and separately obtain end values of the slices. Then, the processor determines the K elements based on the end values of the slices. This means that the hardware sorting unit shares some tasks of the processor, and the processor does not need to participate in an entire sorting process. Therefore, compared with a manner in which the processor independently performs sorting, efficiency is higher. In addition, embodiments of this application do not need to be completed through a multi-core processor, so that power consumption of a device may be reduced.

In an optional implementation, the hardware sorting unit is configured to determine the slice granularities of the plurality of to-be-sorted elements in the following manner: reading a configuration file, where the configuration file includes information about the slice granularity; or receiving an instruction from the processor, where the instruction indicates the slice granularity. There may be a plurality of manners in which the hardware sorting unit needs to determine the slice granularity. For example, the slice granularity may be determined by reading the configuration file, or the slice granularity may be determined by receiving the instruction, which is flexible.

In an optional implementation, the end value is the maximum value, and the K elements are elements whose values are maximum in the plurality of elements. The processor is further configured to: when an end value of a first slice is greater than a heap top element of a binary heap, determine whether each of some or all elements included in the first slice is greater than the heap top element, and if one element is greater than the heap top element, place the element into the binary heap; or if one element is less than or equal to the heap top element, skip placing the element into the binary heap, where the first slice is one of the some or all slices. If the end value of the first slice is greater than the heap top element of the binary heap, it indicates that there may be elements in the first slice that meet an objective of "selecting K elements whose values are maximum". Therefore, the processor may compare each of the some or all elements included in the first slice with the heap top element of the binary heap, to determine whether these elements may be placed in the binary heap. For example, if an element A in the first slice is greater than a heap top element compared with the element A, the processor may place the element A into the binary heap. If the element A in the first slice is less than or equal to a heap top element compared with the element A, because the K elements whose values are maximum are to be obtained, and if the element A is less than or equal to a heap top element of a min heap, it indicates that the element A cannot meet a requirement of obtaining the K elements whose values are maximum. Therefore, the processor may skip place the element A into the binary heap, but continues to compare a next element in the first slice.

In an optional implementation, the end value is the maximum value, and the K elements are elements whose values are maximum in the plurality of elements. The processor is further configured to: when the end value of the first slice is less than or equal to the heap top element of the binary heap, skip placing the first slice into the binary heap, where the first slice is one of the some or all slices. Because the K elements whose values are maximum are to be obtained, if all the maximum values of the first slice are less than or equal to the heap top element of the binary heap, it indicates that no element in the first slice may meet a requirement of obtaining the K elements whose values are maximum. Therefore, the processor does not need to consider the first slice. In this manner, the processor may reduce a quantity of elements participating in comparison, so that processing efficiency may be improved, and power consumption of the processor may also be reduced.

In an optional implementation, the end value is the minimum value, and the K elements are elements whose values are minimum in the plurality of elements. The processor is further configured to: when the end value of the first slice is less than the heap top element of the binary heap, determine whether each of the some or all elements included in the first slice is less than the heap top element, and if one element is less than the heap top element, place the element into the binary heap; or if one element is greater than or equal to the heap top element, skip placing the element into the binary heap, where the first slice is one of the some or all slices. If the end value of the first slice is less than the heap top element of the binary heap, it indicates that there may be elements in the first slice that meet an objective of "selecting K elements whose values are minimum". Therefore, the processor may compare each of the some or all elements included in the first slice with the heap top element of the binary heap, to determine whether these elements may be placed in the binary heap. For example, if the element A in the first slice is less than the heap top element compared with the element A, the processor may place the element A into the binary heap. If the element A in the first slice is greater than or equal to the heap top element compared with the element A, because the K elements whose values are minimum are to be obtained, and if the element A is greater than or equal to the heap top element of the min heap, it indicates that the element A cannot meet a requirement of obtaining the K elements whose values are minimum. Therefore, the processor may skip place the element A into the binary heap, but continues to compare a next element in the first slice.

In an optional implementation, the end value is the minimum value, and the K elements are elements whose values are minimum in the plurality of elements. The processor is further configured to: when the end value of the first slice is greater than or equal to the heap top element of the binary heap, skip placing the first slice into the binary heap, where the first slice is one of the some or all slices. Because the K elements whose values are minimum are to be obtained, if the minimum values of the first slice are all greater than or equal to the heap top element of the binary heap, it indicates that no element in the first slice may meet a requirement of obtaining the K elements whose values are minimum. Therefore, the processor does not need to consider the first slice. In this manner, the processor may reduce a quantity of elements participating in comparison, so that processing efficiency may be improved, and power consumption of the processor may also be reduced.

In an optional implementation, the processor is further configured to sort the K elements in a binary heap manner. The processor may further sort the K elements included in the binary heap. In other words, the processor may further adjust the binary heap, so that the binary heap meets a rule. After the adjustment is completed, the processor may obtain a sequence in an ascending sequence or a sequence in a descending sequence. For example, the processor may output the obtained sequence. Alternatively, because an objective is to obtain the top K minimum values or maximum values, and the binary heap includes the top K minimum values or maximum values, the processor may no longer need to sort the K elements included in the binary heap, but output the K elements included in the binary heap.

In an optional implementation, the hardware sorting unit is an AI processing chip, or the hardware sorting unit includes one or more functional modules in an AI processing chip. In addition, the hardware sorting unit may also be implemented in another manner.

According to a second aspect, a sorting method is provided. The sorting method may be performed through the sorting apparatus in the first aspect. The method may include: A hardware sorting unit in the sorting apparatus determines slice granularities of a plurality of to-be-sorted elements, where each slice includes N elements, and N is an integer greater than or equal to 2; the hardware sorting unit determines an end value of each of some or all M slices obtained based on the slice granularities, where the end value is a maximum value or a minimum value; and a processor in the sorting apparatus determines K elements in the plurality of elements based on the end value of each of the some or all slices, where the K elements are elements whose values are maximum or minimum in the plurality of elements, and K is a positive integer.

In an optional implementation, that a hardware sorting unit determines slice granularities of a plurality of to-be-sorted elements includes: The hardware sorting unit reads a configuration file, where the configuration file includes information about the slice granularity; or the hardware sorting unit receives an instruction from the processor, where the instruction indicates the slice granularity.

In an optional implementation, the end value is the maximum value, and the K elements are elements whose values are maximum in the plurality of elements. The method further includes: When an end value of a first slice is greater than a heap top element of a binary heap, the processor determines whether each of some or all elements included in the first slice is greater than the heap top element, and if one element is greater than the heap top element, the processor places the element into the binary heap; or if one element is less than or equal to the heap top element, the processor skips placing the element into the binary heap, where the first slice is one of the some or all slices.

In an optional implementation, the end value is the maximum value, and the K elements are elements whose values are maximum in the plurality of elements. The method further includes: When the end value of the first slice is less than or equal to the heap top element of the binary heap, the processor skips placing the first slice into the binary heap, where the first slice is one of the some or all slices.

In an optional implementation, the end value is the minimum value, and the K elements are elements whose values are minimum in the plurality of elements. The method further includes: When the end value of the first slice is less than the heap top element of the binary heap, the processor determines whether each of the some or all elements included in the first slice is less than the heap top element, and if one element is less than the heap top element, places the element into the binary heap; or if one element is greater than or equal to the heap top element, skips placing the element into the binary heap, where the first slice is one of the some or all slices.

In an optional implementation, the end value is the minimum value, and the K elements are elements whose values are minimum in the plurality of elements. The method further includes: When the end value of the first slice is greater than or equal to the heap top element of the binary heap, the processor skips placing the first slice into the binary heap, where the first slice is one of the some or all slices.

In an optional implementation, the method further includes: The processor sorts the K elements in a binary heap manner.

In an optional implementation, the hardware sorting unit is an AI processing chip, or the hardware sorting unit includes one or more functional modules in an AI processing chip.

For technical effects brought by the second aspect or the optional implementations, refer to descriptions of the technical effects brought by the first aspect or the corresponding implementations.

## BRIEF DESCRIPTION OF DRAWINGS

FIG. 1 is a schematic diagram of a plurality of processing units;
FIG. 2 is a schematic diagram of bitone sorting;
FIG. 3 is a schematic diagram of a general-purpose processor;
FIG. 4A to FIG. 4E are schematic diagrams of sorting through a max heap;
FIG. 5 is a schematic diagram of a structure of a sorting apparatus according to an embodiment of this application; and
FIG. 6 is a flowchart of a sorting method according to an embodiment of this application.

## DESCRIPTION OF EMBODIMENTS

To make objectives, technical solution, and advantages of embodiments of this application clearer, the following further describes embodiments of this application in detail with reference to the accompanying drawings.

First, technical terms in embodiments of this application are described.

A feature distance, for example, a Euclidean distance between two feature vectors, is considered as a feature distance between the two feature vectors. For example, if one feature vector is $(q_1, q_2, ..., q_n)$, and the other feature

vector is $(p_1, p_2, ..., p_n)$, the Euclidean distance between the two feature vectors may be calculated in the following manner:

$$d(p, \ q)=d(q, \ p)= \sqrt{(q_1 - p_1)^2 + (q_2 - p_2)^2 + \cdots + (q_n - p_n)^2} = \sqrt{\sum_{i=1}^{n}(q_i - p_i)^2}$$

(Formula 1)

Formula 1 is simplified to obtain:

$$\|q - p\| = \sqrt{\|p\|^2 + \|q\|^2 - 2p \times q} \qquad \text{(Formula 2)}$$

$\|x\|$ represents a norm of x.

One piece of data may correspond to one feature vector. If retrieving or clustering needs to be performed on one piece of data, a feature distance between the feature vector of the data and each feature vector in a vector library may be calculated, to obtain a plurality of feature distances. Then, the plurality of feature distances are sorted, to obtain K feature distances whose values are maximum or minimum, so that a meaning, a category, or the like of the data may be further determined based on the K feature distances.

The following describes technical features in embodiments of this application.

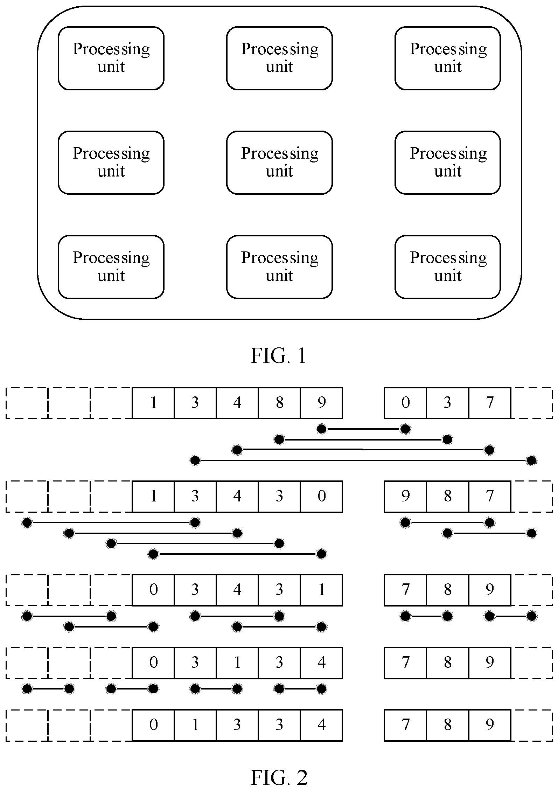

Currently, there are a plurality of sorting algorithms. On an acceleration chip such as a graphics processing unit (graphics processing unit, GPU) or a field-programmable gate array (field-programmable gate array, FPGA), a multi-core sorting algorithm is generally used. For example, FIG. 1 is a schematic diagram of a plurality of processing units, where the plurality of processing units represent a multicore, and an outer box in FIG. 1 represents a device in which the plurality of processing units are located. The multi-core sorting algorithm implements sorting by using multi-core (or the plurality of processing units) parallel computing. A multi-core sorting algorithm is, for example, bitone sorting. The bitone sorting algorithm makes a data comparison sequence independent of data, and may make full use of an advantage of the multicore. The following describes the bitone sorting algorithm.

Initially, a bitone sequence may be constructed. A length of the bitone sequence is, for example, N. First $\frac{1}{2}N$ elements are arranged in an ascending sequence, and last $\frac{1}{2}N$ elements are arranged in a descending sequence. The first $\frac{1}{2}N$ elements are compared with the last $\frac{1}{2}N$ elements. A comparison manner is: comparing an i$^{th}$ element in the first $\frac{1}{2}N$ elements with an i$^{th}$ element in the last $\frac{1}{2}N$ elements. If the i$^{th}$ element in the first $\frac{1}{2}N$ elements is less than or equal to the i$^{th}$ element in the last $\frac{1}{2}N$ elements, no processing is performed, and if the i$^{th}$ element in the first $\frac{1}{2}N$ elements is greater than the i$^{th}$ element in the last $\frac{1}{2}N$ elements, a position of the i$^{th}$ element in the first $\frac{1}{2}N$ elements and a position of the i$^{th}$ element in the last $\frac{1}{2}N$ elements are exchanged. After the comparison between the first 2 N elements and the last 2 N elements is completed, the first $\frac{1}{2}N$ elements are split into two parts from the middle. Each part includes $\frac{1}{4}N$ elements, and the last $\frac{1}{2}N$ elements are split into two parts from the middle. Each part also includes $\frac{1}{4}N$ elements. The two parts obtained by splitting the first $\frac{1}{2}N$ elements are compared, a comparison manner is the same as the foregoing manner. In addition, the two parts obtained by splitting the last $\frac{1}{2}N$ elements are compared, and a comparison manner is the same as the foregoing manner. After the comparison is completed, each part of the four parts including $\frac{1}{4}N$ elements is split into two parts from the middle, and the rest can be deduced by analogy. When each part obtained by splitting includes two elements, a splitting process ends, and a final sorting result is obtained, where the final sorting result is an ascending sequence. If a result of a descending sequence is expected, a basis for exchanging positions of elements during comparison is changed to: If a previous element is greater than or equal to a subsequent element, no processing is performed, or if a previous element is less than a subsequent element, positions of the two elements are exchanged. Other processes are the same as a sorting process in the ascending sequence.

FIG. 2 is a schematic diagram of a bitone sorting algorithm. A sequence participating in sorting may include a plurality of elements. FIG. 2 represents only some of the elements. Therefore, a dashed box in FIG. 2 represents an element that is not drawn. A first row in FIG. 2 represents an initial bitone sequence, and the bitone sequence includes two parts. In FIG. 2, a division point between "9" and "0" is between the two parts, "9" belongs to a first part, and "0" belongs to a second part. A line below the first row represents that elements in the first part are compared with elements in the second part. Two elements pointed to by one line are two compared elements. For example, "9" and "0" are a pair of compared elements, and "8" and "3" are another pair of compared elements. After the comparison is completed, the first part is further divided into two parts, and the second part is also divided into two parts. Then, the two parts included in the first part are compared, and the two parts included in the second part are compared. Referring to a second row in FIG. 2, a line below the second row also represents two elements that are compared with each other, and the rest can be deduced by analogy. A fifth row in FIG. 2 represents a sequence obtained after final sorting.

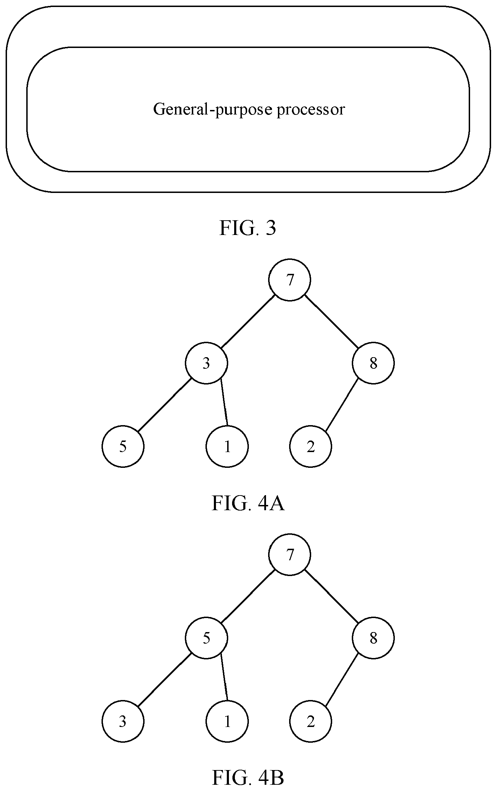

However, on a CPU or some application-specific integrated circuit (application-specific integrated circuit, ASIC) devices, because there are few computing cores, an advantage of using a multi-core sorting algorithm is small. Therefore, a binary heap sorting algorithm is generally used. A binary heap is a non-linear structure. The binary heap may be considered as an array or a complete binary tree. Generally, the binary heap is one-dimensional data maintained by using a structure of the complete binary tree. The binary heap may be classified into a max heap and a min heap. A value of each node in the max heap is greater than or equal to a value of a left child node or a value of a right child node of the node, and a value of each node in the min heap is less than or equal to the value of the left child node or the value of the right child node of the node. FIG. 3 is a schematic diagram of a general-purpose processor. An outer box in FIG. 3 represents a device in which the general-purpose processor is located. Compared with FIG. 1, it may be learnt that FIG. 3 has fewer processing units. The following briefly describes a sorting process of a binary heap sorting algorithm. In the following description process, a max heap is used as an example.

A basic idea of binary heap sorting is to construct a to-be-sorted sequence into a max heap. In this case, a maximum value of an entire sequence is a value of a root node of the heap top. The value of the root node of the heap top is exchanged with a value of a node at an end of the heap. In this case, the node at the end of the heap is the maximum value. Then, remaining n-1 elements are reconstructed into one heap. In this way, a second minimum value of n elements is obtained. In this way, an ordered sequence may be obtained after repeated execution. For ease of understanding, the following describes a sorting process of the max heap through a specific example.

For example, there is a to-be-sorted sequence, and the sequence is {7, 3, 8, 5, 1, 2}. In this case, the sequence is unordered. The sequence may be constructed as one binary heap. For the binary heap, refer to FIG. 4A. Nodes in the binary heap may be numbered by layer. For example, a node 7 of the heap top is numbered 0, a node 3 at a second layer is numbered 1, a node 8 at the second layer is numbered 2, a node 5 at a third layer is numbered 3, a node 1 at the third layer is numbered 4, and a node 2 at the third layer is numbered 5. If a sequence in an ascending sequence needs to be obtained, the max heap is used. If a sequence in a descending sequence needs to be obtained, a min heap is used. The following describes a sorting process of the max heap by using an example in which a sequence in the ascending sequence is obtained.

A last non-leaf child node of the binary heap is first found. For example, a number of the last non-leaf child node of the binary heap is determined in the following manner: $\frac{1}{\text{sequence length}} - 1$. A length of a sequence {7, 3, 8, 5, 1, 2} is 6. In this case, a number of the last non-leaf child node in the binary heap shown in FIG. 4A is 2. In the binary heap shown in FIG. 4A, a value of a node numbered 2 is 8. Next, the value of the node numbered 2 is compared with a value of a left child node and a value of a right child node. If the value of the node is less than the values of the child nodes of the node, the value of the node is exchanged with the values of the child nodes of the node. An objective of the operation is to place the node and a maximum value of the child nodes of the node into the node. For a node numbered 2 in FIG. 4A, a value of the node is 8. The node has only a left child node (namely, a node numbered 5). A value of the child node is 2, and values do not need to be exchanged.

Next, a next non-leaf child node of the binary heap continues to be found. For example, a searching manner is to subtract 1 from a current number, to obtain a number of the next non-leaf child node. In the binary heap shown in FIG. 4A, a value of a node numbered 1 is 3, and the value of the node is less than the value of the left child node (namely, a node numbered 3) of the node. In this case, the value of the node is exchanged with the value of the left child node of the node. After the exchange, a value of the node numbered 1 is 5, and a value of the node numbered 3 is 3. After the exchange, the value of the node numbered 1 is greater than a value of a right child node (namely, a node numbered 4) of the node, and the exchange is not needed. FIG. 4B is a schematic diagram of a binary heap obtained after processing in the step.

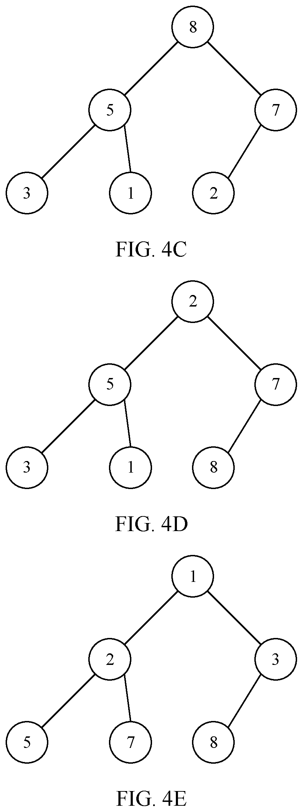

In a next step, a next non-leaf child node continues to be found, and a searching manner is the same as the foregoing manner. The next non-leaf child node is a node numbered 0. A value of the node is 7, and the value is greater than a value of a left child node (namely, a node numbered 1) of the node, and the exchange is not needed. The value of the node is less than the value of the right child node (namely, a node numbered 2) of the node. In this case, the value of the node is exchanged with the value of the right child node of the node. After the exchange, a value of the node numbered 0 is 8, and a value of the node numbered 2 is 7. FIG. 4C is a schematic diagram of a binary heap obtained after processing in the step.

Next, a value of a root node (a node numbered 0) of the heap top and a last node (a node numbered 5) in the heap are exchanged (which may be understood as "sinking" a maximum element to an end of an array). After the exchange, a value of the node numbered 0 is 2, and a value of the node numbered 5 is 8. FIG. 4D is a schematic diagram of a binary heap obtained after processing in the step. In this case, the maximum element in the heap is reset. Then, the foregoing sorting operation continues to be repeated for the remaining five nodes except the node numbered 5. Because sorting processes are similar, details are not described again. After the sorting ends, a sequence in an ascending sequence may be obtained. The sequence in the ascending sequence is {1, 2, 3, 5, 7, 8}. For a corresponding binary heap, refer to FIG. 4E.

It may be learned from the foregoing description that, currently, a sorting process of top K elements is generally completed by using a general-purpose processor such as a CPU, or is completed through a multi-core processor in a multi-core parallel manner. If the sorting process is completed by the general-purpose processor, a resource of the general-purpose processor needs to be occupied. In addition, because the general-purpose processor may further perform a plurality of other tasks in addition to performing a sorting task, efficiency of the sorting process is low. If the sorting process is completed by the multi-core processor in parallel, power consumption is high. It may be learned that the sorting process of the top K feature distances has become a bottleneck of a process such as retrieving or clustering.

In view of this, the technical solutions in embodiments of this application are provided. The sorting apparatus provided in embodiments of this application may include the hardware sorting unit and the processor. The hardware sorting unit may obtain the M slices, and separately obtain end values of the slices. Then, the processor determines the K elements based on the end values of the slices. This means that the hardware sorting unit shares some tasks of the processor, and the processor does not need to participate in an entire sorting process. Therefore, compared with a manner in which the processor independently performs sorting, efficiency is higher. In addition, embodiments of this application do not need to be completed through a multi-core processor, so that power consumption of a device may be reduced.

The technical solutions provided in embodiments of this application are described below in detail with reference to the accompanying drawings.

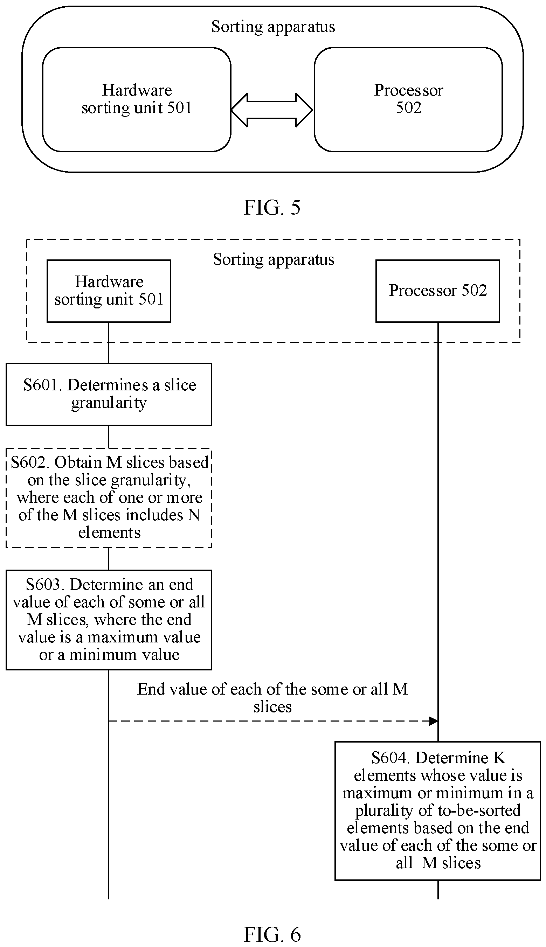

Embodiments of this application provide a sorting apparatus. The sorting apparatus may be a functional module disposed in a server or another device. The functional module is, for example, a chip, or may be a functional module in another form. FIG. 5 is a schematic diagram of a structure of a sorting apparatus according to an embodiment of this application. The sorting apparatus may include at least one hardware sorting unit 501 and a processor 502. A name does not constitute a limitation on a feature. For example, the hardware sorting unit may also have another name, for example, be referred to as a sorting unit.

The hardware sorting unit 501 is, for example, an artificial intelligence (artificial intelligence, AI) processing chip, or the hardware sorting unit is, for example, one or more functional modules in an AI processing chip, or the hardware sorting unit 501 may be implemented in another manner. The sorting apparatus may include at least one hardware sorting unit 501. If the sorting apparatus includes a plurality of hardware sorting units 501, to-be-sorted elements may be separately input into the plurality of hardware sorting units 501. Slices that need to be processed by each hardware sorting unit 501 are reduced, and the plurality of hardware sorting units 501 may be processed in parallel, so that processing efficiency may be improved. However, if the sorting apparatus includes one hardware sorting unit 501, a structure of the sorting apparatus may be simplified. In a description process of embodiments of this application, an example in which the sorting apparatus includes one hardware sorting unit 501 is used. If the sorting apparatus includes the plurality of hardware sorting units 501, a processing process of each hardware sorting unit 501 is similar to a processing process of the hardware sorting unit 501 when the sorting apparatus includes one hardware sorting unit 501.

In embodiments of this application, the processor 502 is, for example, a GPU, an embedded neural-network processing unit (neural-network processing unit, NPU), a general-purpose processor, a digital signal processor, an application-specific integrated circuit, a field-programmable gate array or another programmable logic device, a discrete gate or transistor logic device, or a discrete hardware component, or may be a functional module in these devices, and may implement or perform the methods, steps, and logical block diagrams disclosed in embodiments of this application. The general-purpose processor may be a CPU, a microprocessor, any conventional processor, or the like. The steps of the method disclosed with reference to embodiments of this application may be directly performed by a hardware processor, or may be performed by using a combination of hardware in the processor and a software module.

The hardware sorting unit 501 and the processor 502 need to exchange data in a memory sharing manner. For example, the processor 502 may apply for a memory, and after the application succeeds, the processor 502 may send the memory address to the hardware sorting unit 501. If the hardware sorting unit 501 has data to be transmitted to the processor 502, the data may be stored in the memory, and the processor 502 may obtain the data from the hardware sorting unit 501 by reading the memory. The memory may belong to the processor 502, or the memory may be storage space located outside the processor 502.

In embodiments of this application, the hardware sorting unit 501 may determine a slice granularity. The slice granularity indicates a maximum quantity of elements that may be included in one slice. For example, if the slice granularity is N, it indicates that one slice includes at most N elements, where N is an integer greater than or equal to 2. After determining the slice granularity, the hardware sorting unit 501 may obtain M slices based on the slice granularity, and obtain an end value of each of some or all M slices. The hardware sorting unit 501 sends the obtained end value to the processor 502 (for example, the obtained end value may be sent in a memory sharing manner, or may be sent in another manner). The processor determines K elements whose values are maximum or K elements whose values are minimum in the to-be-sorted elements based on these end values, where K is a positive integer. It may be understood that the hardware sorting unit 501 may perform some operations in a sorting process, and the processor 502 then performs remaining operations in the sorting process, so that top K elements may be obtained through cooperation between the hardware sorting unit 501 and the processor 502. In this way, the hardware sorting unit 501 shares some tasks of the processor 502, and the processor 502 does not need to participate in the entire sorting process. Compared with a manner in which the processor 502 independently performs sorting, efficiency is higher. In addition, embodiments of this application do not need to be completed through a multi-core processor, so that power consumption of a device may be reduced. In addition, the hardware sorting unit 501 is, for example, an AI processing chip, or one or more functional modules in an AI processing chip. In other words, in embodiments of this application, no new hardware module needs to be additionally added as the hardware sorting unit 501, but a module such as a corresponding chip in the device may be used to implement a function of the hardware sorting unit 501, so that a structure of the device may be simplified.

The hardware sorting unit 501 may determine the slice granularity in a plurality of manners. The following describes the manners by using examples.

For example, the hardware sorting unit 501 may read a configuration file. The configuration file may be configured in the hardware sorting unit 501. The configuration file may indicate the slice granularity. In this case, the hardware sorting unit 501 may determine the slice granularity by reading the configuration file. For another example, the processor 502 may determine the slice granularity, and the processor 502 may send an instruction to the hardware sorting unit. The instruction may indicate the slice granularity. After receiving the instruction, the hardware sorting unit 501 may determine the slice granularity. For another example, to-be-sorted elements correspond to a first application (APP) in a device in which the sorting apparatus is located. In other words, the first application corresponds to a plurality of elements, and the plurality of elements need to be sorted. In this case, the first application may send an instruction to the hardware sorting unit 501. The instruction may indicate the slice granularity. After receiving the instruction, the hardware sorting unit 501 may determine the slice granularity. For example, the slice granularity is related to a service. For example, if the service involves a large quantity of to-be-sorted elements, the slice granularity may be large. For example, the first application is a shopping APP, and a plurality of elements corresponding to the shopping APP are information about a plurality of items similar to an item A. Sorting the information about the plurality of items is to determine K items most similar to the item A. The slice granularity may be determined by the shopping APP, and the shopping APP may send information about the slice granularity to the hardware sorting unit 501. Alternatively, in addition to the foregoing manner, the hardware sorting unit 501 may further determine the slice granularity in another manner. This is not limited in embodiments of this application.

If there are to-be-sorted elements, the to-be-sorted elements enter the hardware sorting unit 501. After determining the slice granularity, the hardware sorting unit 501 may obtain M slices based on the slice granularity, where each of the M slices may include one or more elements, and M is a positive integer. For example, the to-be-sorted elements may be gradually input into the hardware sorting unit 501. In this case, each time one element arrives, the hardware sorting unit 501 places the element into one slice. If a quantity of elements included in one slice has reached a quantity indicated by the slice granularity, if a next element arrives, the hardware sorting unit 501 places the next element into a next slice, and does not place the next element into the slice. By analogy, the hardware sorting unit 501 may place the to-be-sorted elements into the M slices. For a last slice of the M slices, a quantity of elements included in the slice may be equal to N, or may be less than N. For other slices of the M slices except the last slice, a quantity of elements included in one slice may be equal to N. N is the slice granularity, or in other words, N is a quantity indicated by the slice granularity. For example, if the slice granularity is 5, and there are 38 to-be-sorted elements in total, the hardware sorting unit 501 may obtain eight slices. Each of the first seven slices of the eight slices may include five elements, and a last slice of the eight slices may include three elements. For another example, if the slice granularity is 5, and there are 40 to-be-sorted elements in total, the hardware sorting unit 501 may obtain eight slices, and each of the eight slices includes five elements.

After obtaining the M slices, the hardware sorting unit 501 may obtain an end value of each of some or all M slices, so that the hardware sorting unit 501 may obtain one or more end values in total. An end value of one slice may refer to a maximum value of elements included in the slice, or a minimum value of elements included in the slice. Whether the hardware sorting unit 501 obtains a maximum value or a minimum value of the slice depends on a sorting requirement. For example, if top K maximum values need to be obtained, the hardware sorting unit 501 obtains the maximum value of the slice. If top K minimum values need to be obtained, the hardware sorting unit 501 obtains the minimum value of the slice. The hardware sorting unit 501 needs to obtain an end value of one slice, for example, compare elements included in the slice, to find the end value of the slice in a comparison manner. For another example, the hardware sorting unit 501 may also sort the elements included in the slice, to obtain the end value of the slice. The hardware sorting unit 501 sorts elements included in one slice, for example, may use a sorting method of a binary heap, or may use another sorting method. This is not limited in embodiments of this application. Alternatively, the hardware sorting unit 501 may obtain the end value of the slice in another manner. After obtaining the end value of each of the some or all M slices, the hardware sorting unit 501 may send the obtained end value to the processor 502. For example, the hardware sorting unit 501 places the obtained end values into the shared memory, and the processor 502 may obtain these end values by reading the shared memory.

A time point at which the hardware sorting unit 501 obtains the M slices may be different. The hardware sorting unit 501 may determine the end value of each of the some or all M slices after obtaining the M slices, or the hardware sorting unit 501 may determine the end value of the slice each time the hardware sorting unit 501 obtains one slice. If the hardware sorting unit 501 jointly obtains the end value of each of the some or all M slices, the hardware sorting unit 501 may jointly send one or more obtained end values to the processor 502. Alternatively, if the hardware sorting unit 501 may determine the end value of the slice each time the hardware sorting unit 501 obtains one slice, the hardware sorting unit 501 may send the end value to the processor 502 each time the hardware sorting unit 501 obtains one end value, so that the processor 502 may perform parallel processing with the hardware sorting unit 501, to improve processing efficiency; or the hardware sorting unit 501 may send the obtained end values to the processor 502 after obtaining all end values. This reduces a quantity of interactions between the hardware sorting unit 501 and the processor 501.

After obtaining the one or more end values from the hardware sorting unit 501, the processor 502 may determine K elements in the plurality of to-be-sorted elements based on the one or more end values. The K elements are top K elements in the plurality of to-be-sorted elements. In other words, the K elements may be K elements whose values are maximum in the plurality of to-be-sorted elements, or K elements whose values are minimum in the plurality of to-be-sorted elements. The following describes a manner of obtaining the K elements by the processor 502. Because the K elements may be the K elements whose values are maximum in the plurality of to-be-sorted elements, or may be the K elements whose values are minimum in the plurality of to-be-sorted elements, the following separately describes the two cases.

1. The K elements may be the K elements whose values are maximum in the plurality of to-be-sorted elements. In this case, the end value obtained by the hardware sorting unit 501 is also a maximum value of the slice.

To obtain the top K elements whose values are maximum, a min heap may be used. For example, the processor 502 may first construct the min heap based on a preset element. A value of a heap top element (which may be understood as a heap top root node in the foregoing binary heap example) of the min heap is a minimum value of the entire heap, and a quantity of elements included in the min heap may be equal to K.

For example, if the processor 502 obtains an end value of a first slice of the M slices, the processor 502 may compare the end value of the first slice with a heap top element of the min heap currently maintained by the processor 502. If the end value of the first slice is greater than the heap top element of the min heap, the processor 502 may separately determine whether each of some or all elements included in the first slice is greater than the heap top element of the min heap. In other words, the processor 502 may compare each of the some or all elements included in the first slice with the heap top element of the min heap. If an element A in the first slice is greater than a heap top element compared with the element A, the processor 502 places the element A into the min heap. If the element A in the first slice is less than or equal to the heap top element compared with the element A, because K elements whose values are maximum are to be obtained, and if the element A is less than or equal to the heap top element of the min heap, it indicates that the element A cannot meet a requirement of obtaining the K elements whose values are maximum. Therefore, the processor 502 may skip placing the element A into the min heap, but continues to compare a next element in the first slice. During comparison, the processor 502 may finally compare the end value of the first slice with the heap top element of the min heap. In embodiments of this application, comparing elements may be understood as comparing values of the elements, or when the elements are the values, it means comparing the elements.

For example, the processor 502 currently maintains a min heap A. After obtaining the end value of the first slice, the processor 502 compares the end value of the first slice with a heap top element of the min heap A. If the end value of the first slice is greater than the heap top element of the min heap A, the processor 502 determines whether the element A included in the first slice is greater than the heap top element of the min heap A. If the element A is less than or equal to the heap top element of the min heap A, the processor 502 skips placing the element A into the min heap A, but continues to compare other elements included in the first slice; and if the element A is greater than the heap top element of the min heap A, the processor 502 replaces the heap top element of the min heap A with the element A. This means that the element A becomes a new heap top element, and an original heap top element is squeezed out of the heap. In this case, it also means that a change occurs in the min heap A. For example, the changed min heap A is referred to as a min heap B. After obtaining the min heap B, the processor 502 may adjust the min heap B, so that the min heap B meets a rule of a min heap. The rule of the min heap is that a value of each node in the min heap is less than or equal to a value of a left child node and a value of a right child node of the node. For the adjustment process, refer to the foregoing description of a sorting process of the binary heap. After the min heap B meets the rule of the min heap, a heap top element of the min heap B may be still the element A, or may not be the element A. The processor 502 then determines whether an element B included in the first slice is greater than the heap top element of the min heap B, and the rest can be deduced by analogy. Comparison processes are similar. After some or all elements included in the first slice are compared, the min heap obtained by the processor 502 is, for example, referred to as a min heap C.

However, if the end value of the first slice is less than or equal to the heap top element of the min heap A, the processor 502 skips placing the first slice into the min heap A, or in other words, the processor 502 does not compare the element included in the first slice with the heap top element of the min heap A. Because the K elements whose values are maximum are to be obtained, if all the maximum values of the first slice are less than or equal to the heap top element of the min heap A, it indicates that no element in the first slice may meet a requirement of obtaining the K elements whose values are maximum. Therefore, the processor 502 does not need to consider the first slice. In this manner, the processor 502 may reduce a quantity of elements participating in comparison, so that processing efficiency may be improved, and power consumption of the processor 502 may also be reduced.

If the processor 502 obtains a min heap C, the processor 502 then compares an end value of a second slice of the M slices with a heap top element of the min heap C; or if the processor 502 skips placing the first slice into the min heap A, the processor 502 still maintains the min heap A in this case, and the processor 502 compares the end value of the second slice of the M slices with the heap top element of the min heap A. For a specific comparison process, refer to a manner of comparing the first slice with the min heap A. Details are not described again.

After the processor 502 compares some or all M slices, a final min heap may be obtained. The min heap includes the K elements whose values are maximum in the plurality of to-be-sorted elements, namely, top K maximum values. In other words, the top K maximum values are obtained through the foregoing process. The processor 502 may further sort the K elements included in the min heap, to be specific, may further adjust the min heap, so that the min heap meets a rule of the min heap. After the adjustment is completed, the processor 502 may obtain a sequence in a descending sequence. For example, the processor 502 may output the obtained sequence. Alternatively, because an objective is to obtain the top K maximum values, and the min heap includes the top K maximum values, the processor 502 may not need to sort the K elements included in the min heap, but output the K elements included in the min heap.

2. The K elements may be the K elements whose values are minimum in the plurality of to-be-sorted elements. In this case, the end value obtained by the hardware sorting unit 501 is also a minimum value of the slice.

To obtain the top K elements whose values are minimum, a max heap may be used. For example, the processor 502 may first construct the max heap based on a preset element. A value of a heap top element of the max heap is a maximum value of the entire heap, and a quantity of elements included in the max heap may be equal to K.

For example, if the processor 502 obtains an end value of a first slice of the M slices, the processor 502 may compare the end value of the first slice with a heap top element of the max heap currently maintained by the processor 502. If the end value of the first slice is less than the heap top element of the max heap, the processor 502 may separately determine whether each of some or all elements included in the first slice is less than the heap top element of the max heap. In other words, the processor 502 may compare each of the some or all elements included in the first slice with the heap top element of the max heap. If an element A in the first slice is less than a heap top element compared with the element A, the processor 502 places the element A into the max heap. If the element A in the first slice is greater than or equal to the heap top element compared with the element A, the processor 502 skips placing the element A into the max heap, but continues to compare a next element in the first slice. During comparison, the processor 502 may finally compare the end value of the first slice with the heap top element of the max heap.

For example, the processor 502 currently maintains a max heap A. After obtaining the end value of the first slice, the processor 502 compares the end value of the first slice with a heap top element of the max heap A. If the end value of the first slice is less than the heap top element of the max heap A, the processor 502 determines whether the element A included in the first slice is less than the heap top element of the max heap A. If the element A is greater than or equal to the heap top element of the max heap A, the processor 502 skips placing the element A into the max heap A, but continues to compare other elements included in the first slice; and if the element A is less than the heap top element of the max heap A, the processor 502 replaces the heap top element of the max heap A with the element A. This means that the element A becomes a new heap top element, and an original heap top element is squeezed out of the heap. In this case, it also means that a change occurs in the max heap A. For example, the changed max heap A is referred to as a max heap B. After obtaining the max heap B, the processor 502 may adjust the max heap B, so that the max heap B meets a rule of a max heap. The rule of the max heap is that a value of each node in the max heap is greater than or equal to a value of a left child node and a value of a right child node of the node. For the adjustment process, refer to the foregoing description of a sorting process of the binary heap. After the max heap B meets the rule of the max heap, a heap top element of the max heap B may be still the element A, or may not be the element A. The processor 502 then determines whether an element B included in the first slice is less than the heap top element of the max heap B, and the rest can be deduced by analogy. Comparison processes are similar. After some or all elements included in the first slice are compared, the max heap obtained by the processor 502 is, for example, referred to as a max heap C.

However, if the end value of the first slice is greater than or equal to the heap top element of the max heap A, the processor 502 does not place the first slice into the max heap A, or in other words, the processor 502 does not compare an element included in the first slice with the heap top element of the max heap A. Because the K elements whose values are minimum are to be obtained, if all the minimum values of the first slice are greater than or equal to the heap top element of the max heap A, it indicates that no element in the first slice may meet a requirement of obtaining the K elements whose values are minimum. Therefore, the processor 502 does not need to consider the first slice. In this manner, the processor 502 may reduce a quantity of elements participating in comparison, so that processing efficiency may be improved, and power consumption of the processor 502 may also be reduced.

If the processor 502 obtains a max heap C, the processor 502 then compares an end value of a second slice of the M slices with a heap top element of the max heap C; or if the processor 502 skips placing the first slice into the max heap A, the processor 502 still maintains the max heap A in this case, and the processor 502 compares the end value of the second slice of the M slices with the heap top element of the max heap A. For a specific comparison process, refer to a manner of comparing the first slice with the max heap A. Details are not described again.

After the processor 502 compares some or all M slices, a final max heap may be obtained. The max heap includes the K elements whose values are minimum in the plurality of to-be-sorted elements, namely, top K minimum values. In other words, the top K minimum values are obtained through the foregoing process. The processor 502 may further sort the K elements included in the max heap, to be specific, may further adjust the max heap, so that the max heap meets a rule of the max heap. After the adjustment is completed, the processor 502 may obtain a sequence in an ascending sequence. For example, the processor 502 may output the obtained sequence. Alternatively, because an objective is to obtain the top K minimum values, and the max heap includes the top K minimum values, the processor 502 may not need to sort the K elements included in the max heap, but output the K elements included in the max heap.

It may be learned that the slice granularity is related to a quantity of comparison times of the processor 502. If the slice granularity is large, if the processor 502 determines to skip placing a slice into the binary heap, because the slice granularity is large and the slice includes a large quantity of elements, a quantity of elements that need to be compared by the processor 502 may be reduced to a large extent. This may improve efficiency of the processor 502 and reduce power consumption. However, if the slice granularity is excessively large, one slice includes many elements. If the processor 502 determines that an end value of one slice meets a requirement for placing the slice into the binary heap, the processor 502 needs to compare each element in the slice with the heap top element. Because the slice granularity is excessively large, the slice may include many elements that do not meet the requirement for placing the slice into the binary heap. However, the processor 502 also needs to compare these elements. This increases workload of the processor 502. If the slice granularity is excessively small, a quantity of elements that need to be compared by the processor 502 increases, which does not meet a requirement for reducing load of the processor 502. Therefore, regardless of whether the slice granularity is indicated by a configuration file or an upper-layer application, or the slice granularity is indicated in another manner, the slice granularity needs to be comprehensively measured. For example, the slice granularity may be determined based on a total quantity of to-be-sorted elements and/or other factors, to select a proper value as the slice granularity.

Referring to FIG. 6, the following describes a sorting method provided in embodiments of this application. The sorting method may be implemented, for example, through the sorting apparatus shown in FIG. 5.

S601. A hardware sorting unit 501 determines a slice granularity.

S602. The hardware sorting unit 501 obtains M slices based on the slice granularity, where each of one or more of the M slices includes N elements. S602 is an optional step, and is represented by a dashed line in FIG. 6.

S603. The hardware sorting unit determines an end value of each of some or all M slices, where the end value is a maximum value or a minimum value.

S604. A processor 502 determines K elements in a plurality of to-be-sorted elements based on the end value of each of the some or all slices, where the K elements are elements whose values are maximum or minimum.

For details of the steps in the embodiment shown in FIG. 6, for example, how the hardware sorting unit 501 determines the slice granularity, how to obtain the M slices, how to determine the end value of the slice, how to send the end value to the processor 502, and how the processor 502 determines the K elements, refer to the description of the embodiment shown in FIG. 5.

In embodiments of this application, the hardware sorting unit 501 shares some operations in a sorting process, so that load of the processor 502 may be reduced, and processing efficiency of the processor 502 may be improved. In addition, the hardware sorting unit 501 is, for example, an AI processing chip, or one or more functional modules in an AI processing chip. A processing delay of the hardware sorting unit 501 is short, and processing efficiency is high. Therefore, sorting efficiency may be further improved.

Embodiments of this application provide a chip system. The chip system includes a processor, and the processor may implement functions of the processor 502 and the hardware sorting unit 501. Optionally, the chip system may further include a memory. The chip system may implement functions of the sorting apparatus in the foregoing method. The chip system may include a chip, or may include a chip and another discrete component.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiment is merely an example. For example, the unit division is merely logical function division. The units described as separate parts may or may not be physically separate, and the parts displayed as units may or may not be physical units, may be located in one position, or may be distributed on a plurality of network units. Some or all units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash memory (universal serial bus flash disk), a removable hard disk, a magnetic disk storage medium, or another magnetic storage device, or any other medium that can be used to carry or store expected program code in a form of an instruction or a data structure and that can be accessed by a computer. In addition, through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A sorting apparatus, comprising:

a hardware sorting unit, configured to determine slice granularities of a plurality of to-be-sorted elements, and determine an end value of each of some or all M slices obtained based on the slice granularities, wherein each slice comprises N elements, N is an integer greater than or equal to 2, and the end value is a maximum value or a minimum value; and

a processor, configured to determine K elements in the plurality of elements based on the end value of each of the some or all slices, wherein the K elements are elements whose values are maximum or minimum in the plurality of elements, and K is a positive integer.

2. The apparatus according to claim 1, wherein the hardware sorting unit is configured to determine the slice granularities of the plurality of to-be-sorted elements in the following manner:

reading a configuration file, wherein the configuration file comprises information about the slice granularity; or receiving an instruction from the processor, wherein the instruction indicates the slice granularity.

3. The apparatus according to claim 1 or 2, wherein the end value is the maximum value, and the K elements are elements whose values are maximum in the plurality of elements; and
the processor is further configured to: when an end value of a first slice is greater than a heap top element of a binary heap, determine whether each of some or all elements comprised in the first slice is greater than the heap top element, and if one element is greater than the heap top element, place the element into the binary heap; or if one element is less than or equal to the heap top element, skip placing the element into the binary heap, wherein the first slice is one of the some or all slices.

4. The apparatus according to any one of claims 1 to 3, wherein the end value is the maximum value, and the K elements are elements whose values are maximum in the plurality of elements; and
the processor is further configured to: when the end value of the first slice is less than or equal to the heap top element of the binary heap, skip placing the first slice into the binary heap, wherein the first slice is one of the some or all slices.

5. The apparatus according to any one of claims 1 to 4, wherein the end value is the minimum value, and the K elements are elements whose values are minimum in the plurality of elements; and
the processor is further configured to: when the end value of the first slice is less than the heap top element of the binary heap, determine whether each of the some or all elements comprised in the first slice is less than the heap top element, and if one element is less than the heap top element, place the element into the binary heap; or if one element is greater than or equal to the heap top element, skip placing the element into the binary heap, wherein the first slice is one of the some or all slices.

6. The apparatus according to any one of claims 1 to 5, wherein the end value is the minimum value, and the K elements are elements whose values are minimum in the plurality of elements; and
the processor is further configured to: when the end value of the first slice is greater than or equal to the heap top element of the binary heap, skip placing the first slice into the binary heap, wherein the first slice is one of the some or all slices.

7. The apparatus according to any one of claims 1 to 6, wherein
the processor is further configured to sort the K elements in a binary heap manner.

8. The apparatus according to any one of claims 1 to 7, wherein the hardware sorting unit is an AI processing chip, or the hardware sorting unit comprises one or more functional modules in an AI processing chip.

9. A sorting method, applied to a sorting apparatus, wherein the method comprises:

determining, by a hardware sorting unit in the sorting apparatus, slice granularities of a plurality of to-be-sorted elements, wherein each slice comprises N elements, and N is an integer greater than or equal to 2;
determining, by the hardware sorting unit, an end value of each of some or all M slices obtained based on the slice granularities, wherein the end value is a maximum value or a minimum value; and
determining, by a processor in the sorting apparatus, K elements in the plurality of elements based on the end value of each of the some or all slices, wherein the K elements are elements whose values are maximum or minimum in the plurality of elements, and K is a positive integer.

10. The method according to claim 9, wherein the determining, by a hardware sorting unit, slice granularities of a plurality of to-be-sorted elements comprises:

reading, by the hardware sorting unit, a configuration file, wherein the configuration file comprises information about the slice granularity; or
receiving, by the hardware sorting unit, an instruction from the processor, wherein the instruction indicates the slice granularity.

11. The method according to claim 9 or 10, wherein the end value is the maximum value, the K elements are elements whose values are maximum in the plurality of elements, and the method further comprises:
when an end value of a first slice is greater than a heap top element of a binary heap, determining, by the processor, whether each of some or all elements comprised in the first slice is greater than the heap top element, and if one element is greater than the heap top element, placing, by the processor, the element into the binary heap; or if one element is less than or equal to the heap top element, skipping placing, by the processor, the element into the binary heap, wherein the first slice is one of the some or all slices.

12. The method according to any one of claims 9 to 11, wherein the end value is the maximum value, the K elements are elements whose values are maximum in the plurality of elements, and the method further comprises:
when the end value of the first slice is less than or equal to the heap top element of the binary heap, skipping, by the processor, placing the first slice into the binary heap, wherein the first slice is one of the some or all slices.

13. The method according to any one of claims 9 to 12, wherein the end value is the minimum value, the K elements are elements whose values are minimum in the plurality of elements, and the method further comprises:
when the end value of the first slice is less than the heap top element of the binary heap, determining, by the processor, whether each of the some or all elements comprised in the first slice is less than the heap top element, and if one element is less than the heap top element, placing, by the processor, the element into the binary heap; or if one element is greater than or equal to the heap top element, skipping placing, by the processor, the element into the binary heap, wherein the first slice is one of the some or all slices.

14. The method according to any one of claims 9 to 13, wherein the end value is the minimum value, the K elements are elements whose values are minimum in the plurality of elements, and the method further comprises:
when the end value of the first slice is greater than or equal to the heap top element of the binary heap, skipping, by the processor, placing the first slice into the binary heap, wherein the first slice is one of the some or all slices.

15. The method according to any one of claims 9 to 14, wherein the method further comprises:
sorting, by the processor, the K elements in a binary heap manner.

16. The method according to any one of claims 9 to 15, wherein the hardware sorting unit is an AI processing chip, or the hardware sorting unit comprises one or more functional modules in an AI processing chip.

17. A computer-readable storage medium, wherein the computer-readable storage medium is configured to store a computer program; and when the computer program is run on a computer, the computer is enabled to perform the method according to any one of claims 9 to 16.

FIG. 1

FIG. 2

General-purpose processor

FIG. 3

FIG. 4A

FIG. 4B

FIG. 4C

FIG. 4D

FIG. 4E

Sorting apparatus

Hardware
sorting unit 501

Processor
502

**FIG. 5**

Sorting apparatus

Hardware
sorting unit 501

Processor 502

S601. Determines a slice
granularity

S602. Obtain M slices based
on the slice granularity,
where each of one or more
of the M slices includes N
elements

S603. Determine an end
value of each of some or all
M slices, where the end
value is a maximum value
or a minimum value

End value of each of the some or all M
slices

S604. Determine K
elements whose value is
maximum or minimum in a
plurality of to-be-sorted
elements based on the end
value of each of the some or
all M slices

**FIG. 6**

| | INTERNATIONAL SEARCH REPORT | International application No. |
|---|---|---|
| | | **PCT/CN2021/103111** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 数据, 元素, 查询, 检索, 分组, 分片, 粒度, 并行, 处理, 排序, 最大, 最小, 硬件, 堆, data, element, query, retrieval, group, parallel, process, order, maximum, minimum, hardware, stack

**C. DOCUMENTS CONSIDERED TO BE RELEVANT**

| Category* | Citation of document, with indication, where appropriate, of the relevant passages | Relevant to claim No. |
|---|---|---|
| X | CN 112395623 A (HUAGONG QINGJIAO INFORMATION TECHNOLOGY (BEIJING) CO., LTD.) 23 February 2021 (2021-02-23) description paragraphs [0039]-[0152], [0209]-[0217], claims 1-10 | 1-17 |
| A | CN 112085644 A (SHANGHAI ZILLIZ INFORMATION TECHNOLOGY CO., LTD.) 15 December 2020 (2020-12-15) entire document | 1-17 |
| A | CN 108228663 A (HANGZHOU HIKVISION DIGITAL TECHNOLOGY CO., LTD.) 29 June 2018 (2018-06-29) entire document | 1-17 |
| A | CN 103440246 A (BAIDU ONLINE NETWORK TECHNOLOGY (BEIJING) CO., LTD.) 11 December 2013 (2013-12-11) entire document | 1-17 |
| A | US 2019347071 A1 (GOOGLE L.L.C.) 14 November 2019 (2019-11-14) entire document | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2021** | **24 November 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/103111**

| Patent document cited in search report | | | Publication date (day/month/year) | Patent family member(s) | | | Publication date (day/month/year) |
|---|---|---|---|---|---|---|---|
| CN | 112395623 | A | 23 February 2021 | None | | | |
| CN | 112085644 | A | 15 December 2020 | None | | | |
| CN | 108228663 | A | 29 June 2018 | None | | | |
| CN | 103440246 | A | 11 December 2013 | None | | | |
| US | 2019347071 | A1 | 14 November 2019 | EP | 3757754 | A1 | 30 December 2020 |
| | | | | CN | 109964203 | A | 02 July 2019 |
| | | | | WO | 2018089993 | A1 | 17 May 2018 |
| | | | | EP | 3526665 | A1 | 21 August 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110209778

- CN 202110321985